# EUROPÄISCHE PATENTSCHRIFT

(11) **EP 1 410 935 B1**
(45) Veröffentlichungstag und Bekanntmachung des Hinweises auf die Patenterteilung: **10.08.2005**
(21) Anmeldenummer: 02102464.1
(22) Anmeldetag: 18.10.2002
(51) Int. Cl.: B60K 6/04, F02D 45/00, B60K 41/00

(54) **Verfahren zur Reduzierung der Abgasemissionen eines Motorsystems**
Method for reducing exhaust emission of an engine system
Procédé de réduction d'émission polluante d'un système de moteur

(43) Veröffentlichungstag der Anmeldung: 21.04.2004
(73) Patentinhaber: Ford Global Technologies, LLC, Dearborn, MI 48126 (US)
(72) Erfinder: Moore, Jeremy, 48111, Belleville (US); Eifert, Mark, 52070, Aachen (DE)
(74) Vertreter: Drömer, Hans-Carsten, Dr.-Ing.

(56) Entgegenhaltungen:
- EP-A- 1 136 311
- US-A- 4 305 254
- US-A- 4 407 132
- US-A- 4 533 011
- US-A- 5 343 970
- US-A- 5 495 906
- US-A- 5 842 534
- US-A- 5 969 624

## Beschreibung

Die Erfindung betrifft ein Verfahren zur Reduzierung der Abgasemissionen während des Kaltstarts einer Brennkraftmaschine, die mit einem Startermotor gekoppelt ist und in deren Abgasleitung eine Abgasbehandlungseinrichtung angeordnet ist. Ferner betrifft die Erfindung ein Motorsystem enthaltend eine Brennkraftmaschine, einen mit der Brennkraftmaschine gekoppelten Startermotor und eine in der Abgasleitung der Brennkraftmaschine angeordnete Abgasbehandlungseinrichtung.

Zur Entfernung von Schadstoffen wie insbesondere Kohlenwasserstoffen (HC) und Stickoxiden (NOₓ) aus dem Abgas von Brennkraftmaschinen werden üblicherweise Abgasbehandlungseinrichtungen eingesetzt. Diese müssen jedoch eine bestimmte Betriebstemperatur erreicht haben, bevor sie wirksam werden können. Während des Kaltstarts eines Motors gelangen daher für einen gewissen Zeitraum Schadstoffe unvermindert in die Atmosphäre, was erheblich zur gesamten während einer Fahrt emittierten Schadstoffmenge beiträgt.

Zur Minimierung der Abgasemissionen während eines Kaltstarts wird versucht, die Zeit bis zum Erreichen der Betriebstemperatur der Abgasbehandlungseinrichtung zu verkürzen. Diesbezüglich wird häufig die Belastung der Brennkraftmaschine künstlich erhöht, um einen großen Abgasstrom bei höherer Temperatur zu erzeugen. Die höhere Belastung der Brennkraftmaschine hat jedoch gleichzeitig eine vermehrte Produktion von Schadstoffen zur Folge, was der gewünschten Emissionsreduktion entgegenwirkt.

Vor diesem Hintergrund war es Aufgabe der vorliegenden Erfindung, ein Verfahren sowie ein entsprechend ausgebildetes Motorsystem bereitzustellen, die bzw. das eine weitere Reduzierung der Abgasemissionen während des Kaltstarts einer Brennkraftmaschine erlaubt.

Diese Aufgabe wird durch ein Verfahren mit den Merkmalen des Anspruchs 1, durch ein Verfahren mit den Merkmalen des Anspruchs 4 sowie durch ein Motorsystem mit den Merkmalen des Anspruchs 8 gelöst.

Vorteilhafte Ausgestaltungen sind in den Unteransprüchen enthalten.

Das erfindungsgemäße Verfahren dient der Reduzierung der Abgasemissionen während des Kaltstarts einer Brennkraftmaschine, die mit einem Startermotor ("Anlasser") gekoppelt ist und in deren Abgasleitung eine Abgasbehandlungseinrichtung wie zum Beispiel ein Oxidationskatalysator oder eine Stickoxidfalle angeordnet ist. Das Verfahren ist dadurch gekennzeichnet, daß die Brennkraftmaschine bis zum Erreichen der Betriebstemperatur der Abgasbehandlungseinrichtung durch den Startermotor unterstützt wird.

Der Startermotor wird benötigt, um die Brennkraftmaschine anzulassen. Sobald diese durch die Verbrennung von Kraftstoff ihre Rotation selbst aufrechterhält, wird der Startermotor üblicherweise abgeschaltet. Im Gegensatz hierzu bleibt der Startermotor beim obigen Verfahren auch nach dem Anspringen der Brennkraftmaschine noch in Betrieb, um parallel zur Brennkraftmaschine mechanische Leistung abzugeben. Ein Startermotor der heute üblichen Art und Bauweise ist allerdings in der Regel nicht in der Lage das durch die beschriebene Anordnung erforderliche Drehmoment ohne Änderungen der Bauweise aufzubringen. Es ist daher ein modifizierter Startermotor oder der Einsatz eines sogenannten Starter-Generators erforderlich. Ein Starter-Generator vereinigt die üblicherweise getrennten Funktionen von Startermotor und Generator oder Lichtmaschine in einem Bauteil. Der Starter-Generator ist üblicherweise direkt mit der Kurbelwelle der Brennkraftmaschine gekoppelt. Durch den Leistungsbeitrag des Startermotors verringert sich die Belastung der Brennkraftmaschine entsprechend. Im Extremfall kann der Startermotor sogar die gesamte mechanische Last des Antriebsstranges und eventuell vorhandener Hilfseinrichtungen (Pumpen etc.) übernehmen. Aufgrund der verringerten Belastung werden von der Brennkraftmaschine weniger Schadstoffe erzeugt. Überraschenderweise zeigt sich dabei, daß auf diese Weise insgesamt eine Reduzierung der Abgasemissionen während des Kaltstarts erzielt werden kann, obgleich es wegen der niedrigeren Abgastemperaturen in der Regel länger dauert, bis die Abgasbehandlungseinrichtung ihre Betriebstemperatur reicht.

Die Leistungsabgabe des Startermotors während des Kaltstarts wird vorzugsweise derart geregelt, daß bereits existierende und/oder bevorstehende Leistungsanforderungen des Antriebssystems und/oder von Hilfseinrichtungen des Kraftfahrzeuges (zum Beispiel Pumpen) vom Startermotor erfüllt werden. Die vorausschauende Steuerung des Startermotors im Hinblick auf zukünftige Lasten stellt dabei sicher, daß sich derartige Lasten nicht auf die Brennkraftmaschine und damit den Schadstoffausstoß auswirken können.

Nach Erreichen der Betriebstemperatur der Abgasbehandlungseinrichtung, d. h. nach Beendigung des Kaltstarts, wird der Startermotor vorzugsweise als Generator betrieben. Die während des Kaltstarts durch den Parallelbetrieb des Startermotors verbrauchte elektrische Energie kann dann regeneriert werden.

Gemäß einem weiteren Verfahren zur Reduzierung der Abgasemissionen während des Kaltstarts einer Brennkraftmaschine, welche mit einem Startermotor gekoppelt ist und in deren Abgasleitung eine Abgasbehandlungseinrichtung angeordnet ist, wird die Kraftstoffzufuhr zur Brennkraftmaschine erst bei Überschreiten einer Drehzahl nahe oder gleich der Leerlaufdrehzahl aufgenommen. Die Leerlaufdrehzahl liegt heutzutage bei kalten Motoren bei ca. 1000 U/min, um dann bei warmen Motoren auf um die 800 U/min zu sinken. Die Kraftstoffzufuhr erfolgt somit erheblich später als bei bekannten Startverfahren, bei denen in der Regel die Kraftstoffzufuhr bei etwa 100 bis 300 U/min einsetzt. Überraschenderweise hat sich jedoch gezeigt, daß diese "späte" Kraftstoffinjektion zu einer erheblichen Reduzierung der Abgasemissionen führt. Eine besonders hohe Abgasreduktion wird erhalten, wenn ein derartiges Verfahren mit der zuvor beschriebenen Belastungsreduktion der Brennkraftmaschine durch Parallelbetrieb des Startermotors kombiniert wird.

Zur weiteren Minimierung der Abgasemissionen während des Kaltstarts kann das Erreichen der Betriebstemperatur der Abgasbehandlungseinrichtung beschleunigt werden. Eine solche Beschleunigung kann zum Beispiel durch die Verzögerung der Funkenzündung einer fremdgezündeten Brennkraftmaschine, durch die Erwärmung der Abgasbehandlungseinrichtung mittels aktiver (vorzugsweise elektrischer) Heizelemente und/oder durch die Verzögerung der Schaltvorgänge eines mit der Brennkraftmaschine gekoppelten Automatikgetriebes erreicht werden.

Die Erfindung betrifft weiterhin ein Motorsystem enthaltend eine Brennkraftmaschine, einen mit der Brennkraftmaschine gekoppelten Startermotor und eine in der Abgasleitung der Brennkraftmaschine angeordnete Abgasbehandlungseinrichtung. Das Motorsystem ist gekennzeichnet durch einen mit dem Startermotor gekoppelten Regler, wobei der Regler dahingehend ausgebildet ist, eines der Verfahren der vorstehend erläuterten Art auszuführen. D. h., daß der Regler gemäß einer ersten Variante den Startermotor so ansteuern kann, daß dieser bis zum Erreichen der Betriebstemperatur der Abgasbehandlungseinrichtung betrieben wird und dabei für eine Reduzierung beziehungsweise Minimierung der Belastung der Brennkraftmaschine sorgt. Gemäß einer zweiten Variante ist der Regler (zusätzlich oder alternativ) dahingehend ausgebildet, die Kraftstoffzufuhr zur Brennkraftmaschine erst bei Überschreiten einer Drehzahl, die nahe oder gleich der Leerlaufdrehzahl ist, einzuleiten.

Bei dem Startermotor des Motorsystems kann es sich insbesondere um einen sogenannten Starter-Generator handeln, welcher sowohl als ein Starter oder Anlasser, der elektrische Energie in mechanische umwandelt, wie auch als ein Generator, der mechanische Energie in elektrische umwandelt, betrieben werden kann. Leistungsfähige integrierte Starter-Generatoren sind insbesondere bei modernen Kraftfahrzeugen vorhanden, die in einem Stop-and-go-Modus betrieben werden, bei welchem die Brennkraftmaschine bei jedem längeren Halt abgeschaltet wird.

Gemäß einer Weiterbildung des Motorsystems weist die Abgasbehandlungseinrichtung eine elektrische Heizeinrichtung auf. Mit dieser Heizeinrichtung kann während eines Kaltstarts eine beschleunigte Erwärmung der Abgasbehandlungseinrichtung aktiv unterstützt werden, ohne daß die Brennkraftmaschine hierdurch belastet würde.

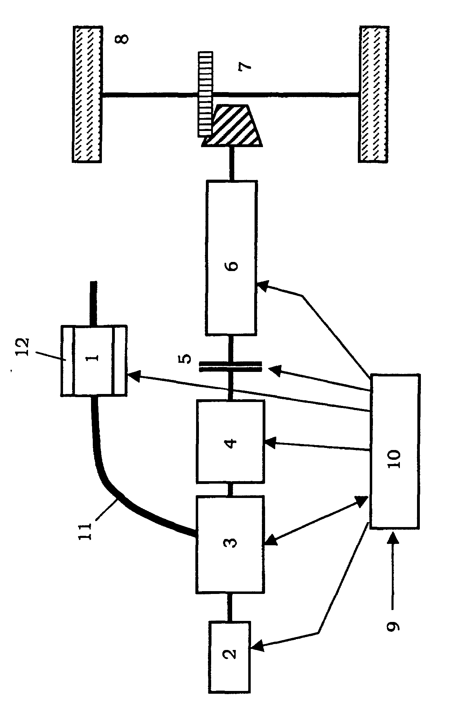

Im Folgenden wird die Erfindung anhand der Figur beispielhaft näher erläutert.

Die einzige Figur zeigt schematisch die Komponenten eines erfindungsgemäßen Motorsystems.

Das Motorsystem umfaßt einen Antriebsstrang, welcher der Reihe nach enthält: eine Brennkraftmaschine 3, einen an der Ausgangswelle der Brennkraftmaschine 3 angeordneten Starter-Generator 4, eine Kupplung 5, ein automatisches Getriebe 6, ein Achsgetriebe 7 sowie die angetriebenen Räder 8. In der von der Brennkraftmaschine 3 abzweigenden Abgasleitung 11 ist als Abgasbehandlungseinrichtung ein Katalysator 1 angeordnet, der mit einer elektrischen Zusatzheizung 12 gekoppelt ist. Weiterhin werden von der Brennkraftmaschine 3 Zusatzeinrichtungen 2 wie zum Beispiel verschiedene Pumpen angetrieben.

Bei einem Betrieb des dargestellten Motorsystems zeigt sich, daß die ersten (größenordnungsmäßig fünfzehn) Sekunden nach einem Kaltstart der Brennkraftmaschine 3 kritisch für die Gesamtmenge an während der Fahrtzeit emittierten Schadstoffen sind, insbesondere an Kohlenwasserstoffen HC und Stickoxiden NOₓ. Dies hat seinen Grund darin, daß der Katalysator 1 erst nach Erreichen einer minimalen Betriebstemperatur aktiv wird. Um die benötigte Warmlaufzeit durch einen höheren Abgasstrom mit höherer Temperatur zu verkürzen, wird daher häufig die Belastung der Brennkraftmaschine 3 während des Kaltstarts künstlich erhöht.

Im Gegensatz zu diesem bekannten Vorgehen wird erfindungsgemäß die Belastung der Brennkraftmaschine 3 während des Warmlaufens reduziert beziehungsweise minimiert, indem der Starter-Generator 4 auch nach dem Anspringen der Brennkraftmaschine 3 noch weiterbetrieben wird und daher mechanische Leistung in den Antriebsstrang einspeist. Im Extrem- bzw. Idealfall kann diese Leistung des Starter-Generators 4 so groß sein, daß sie das gesamte Drehmoment für den Antrieb des Kraftfahrzeuges sowie den Betrieb der Zusatzeinrichtungen 2 erzeugt. Die damit verbundene Entlastung der Brennkraftmaschine 3 führt dazu, daß deren Produktion an HC und NOₓ Emissionen minimiert wird. Statt auf eine möglichst schnelle Erwärmung des Katalysators 1 (ohne Rücksicht auf die dabei erzeugten zusätzlichen Emissionen) wird somit vorliegend das Augenmerk vorrangig darauf gerichtet, die Produktion an Schadstoffen zu minimieren. Es zeigt sich, daß auf diese Weise trotz der Verlängerung der Aufwärmphase des Katalysators 1 insgesamt eine Emissionsreduktion erreicht werden kann.

Zur Durchführung des erfindungsgemäßen Verfahrens ist ein entsprechend eingerichteter Antriebsstrang-Regler 10 vorgesehen, der zum Beispiel als Mikrocomputer beziehungsweise als Programm in einer vorhandenen Motorsteuerung ausgebildet sein kann. Der Regler 10 ist dazu eingerichtet, die Leistung des Starter-Generators 4 so zu kontrollieren, daß die Drehmomentanforderungen für den Antrieb des Kraftfahrzeuges und für gemessene oder vorhergesagte Belastungen der Zusatzeinrichtungen 2 erfüllt werden. Zu diesem Zweck ist der Regler 10 mit den Zusatzeinrichtungen 2, der Brennkraftmaschine 3, dem Starter-Generator 4, dem Katalysator 1 und einer darin enthaltenen Heizeinrichtung 12, der Kupplung 5 sowie dem Getriebe 6 gekoppelt. Weiterhin erhält der Regler 10 von einer Einrichtung 9 (zum Beispiel dem Gaspedal) eine Information über die geforderte Antriebsleistung, so daß er hierauf reagieren kann. Aufgrund der weitgehenden Übernahme von Lasten durch den Starter-Generator 4 kann die Brennkraftmaschine 3 dann unter geringer Belastung und somit mit geringen Schadstoffemissionen warmlaufen.

Bei der beschriebenen Drehmomententlastung der Brennkraftmaschine 3 kann es typischerweise zwei bis drei Minuten dauern, bis der Katalysator 1 seine Betriebstemperatur erreicht. Die Aufwärmzeit hängt dabei im Wesentlichen von der Umgebungstemperatur sowie vom Massenfluß der warmen Abgase ab, welcher eine Funktion der Motorgröße und der Drehzahl ist. Um die Aufwärmzeit zu verkürzen, können vom Regler 10 weitere Maßnahmen wie zum Beispiel eine Verzögerung der Funkenzündung in der (fremdgezündeten) Brennkraftmaschine 3 sowie eine Verzögerung der Schaltpunkte im Automatikgetriebe 6 eingeleitet werden. Weiterhin kann der Katalysator 1 durch den Einsatz der aktiven elektrischen Heizeinrichtung 12 zusätzlich aufgeheizt werden.

Die Entlastung der Brennkraftmaschine 3 während eines Kaltstarts kann zur weiteren Reduktion der HC und NOₓ Emissionen mit einer Strategie des Startens bei hoher Drehzahl kombiniert werden. Bei einer derartigen Strategie erfolgt die Kraftstoffzufuhr zur Brennkraftmaschine erst bei sehr viel höheren Drehzahlen als üblich. Insbesondere konnte in Messungen eine erhebliche Reduktion der Emissionen während des Startens nachgewiesen werden, wenn die Drehzahl, bei welcher die Kraftstoffinjektion beginnt, von üblicherweise 100 bis 300 Ulmin auf oder nahe der Leerlaufdrehzahl (ca. 800 U/min) erhöht wird.

Zusammenfassend ergibt sich somit folgendes Vorgehen beim Starten des Kraftfahrzeuges:
1. Anlassen der Brennkraftmaschine 3 mit dem Starter-Generator 4 und Beginn der Kraftstoffinjektion, wenn die Drehzahl der Brennkraftmaschine die Leerlaufdrehzahl (annähernd) erreicht.
2. Messen der mechanischen Zusatzlasten und Regelung des Starter-Generators 4 zur Erzeugung eines Zusatzdrehmomentes, das die Summe der mechanischen Lasten und der Antriebsanforderungen abdeckt.
3. Schnellstmögliche Erhöhung der Temperatur des Katalysators 1 durch
   a) einen erhöhten Abgasfluß durch verzögerte Schaltvorgänge bei einem Kraftfahrzeug mit Automatikgetriebe;
   b) Verzögerung der Funkenzündung in einer fremdgezündeten Brennkraftmaschine;
   c) elektrische Aufheizung des Katalysators 1, falls entsprechende Heizelemente 12 vorhanden sind.
4. Nach dem Erreichen der Betriebstemperatur des Katalysators 1 kann die Leistungsunterstützung durch den Starter-Generator 4 beendet werden. Stattdessen wird der Starter-Generator 4 anschließend vorzugsweise als Generator betrieben, um die während des Startvorganges verbrauchte elektrische Energie zu ersetzen.

## Patentansprüche

1. Verfahren zur Reduzierung der Abgasemissionen während des Kaltstarts einer Brennkraftmaschine (3), die mit einem Startermotor (4) gekoppelt ist und in deren Abgasleitung (11) eine Abgasbehandlungseinrichtung (1) angeordnet ist,
**dadurch gekennzeichnet, daß**
die Brennkraftmaschine bis zum Erreichen der Betriebstemperatur der Abgasbehandlungseinrichtung (1) durch den Startermotor (4) unterstützt wird.

2. Verfahren nach Anspruch 1,
**dadurch gekennzeichnet, daß**
die Leistungsabgabe des Startermotors (4) derart geregelt wird, daß existierende und/oder bevorstehende Leistungsanforderungen des Antriebssystems und/oder von Hilfseinrichtungen (2) durch den Startermotor (4) erfüllt werden.

3. Verfahren nach Anspruch 1 oder 2,
**dadurch gekennzeichnet, daß**
der Startermotor (4) nach dem Erreichen der Betriebstemperatur der Abgasbehandlungseinrichtung (1) als Generator betrieben und die während des Kaltstarts verbrauchte elektrische Energie regeneriert wird.

4. Verfahren zur Reduzierung der Abgasemissionen während des Kaltstarts einer Brennkraftmaschine (3), die mit einem Startermotor (4) gekoppelt ist und in deren Abgasleitung (11) eine Abgasbehandlungseinrichtung (1) angeordnet ist, insbesondere Verfahren nach mindestens einem der Ansprüche 1 bis 3,
**dadurch gekennzeichnet, daß**
die Kraftstoffzufuhr zur Brennkraftmaschine (3) erst bei Überschreiten einer Drehzahl nahe oder gleich der Leerlaufdrehzahl einsetzt.

5. Verfahren nach mindestens einem der Ansprüche 1 bis 4,
**dadurch gekennzeichnet, daß**
die Funkenzündung der Brennkraftmaschine (3) verzögert wird.

6. Verfahren nach mindestens einem der Ansprüche 1 bis 5,
**dadurch gekennzeichnet, daß**
die Abgasbehandlungseinrichtung (1) durch aktive Heizelemente (12) erwärmt wird.

7. Verfahren nach mindestens einem der Ansprüche 1 bis 6,
**dadurch gekennzeichnet, daß**
die Schaltvorgänge eines mit der Brennkraftmaschine (3) gekoppelten Automatikgetriebes (6) verzögert werden.

8. Motorsystem enthaltend eine Brennkraftmaschine (3), einen hiermit gekoppelten Startermotor (4) und eine in der Abgasleitung (11) der Brennkraftmaschine angeordnete Abgasbehandlungseinrichtung (1), **gekennzeichnet durch** einen mit dem Startermotor (4) gekoppelten Regler (10), welcher dazu eingerichtet ist, ein Verfahren nach mindestens einem der Ansprüche 1 bis 7 auszuführen.

9. Motorsystem nach Anspruch 8,
**dadurch gekennzeichnet, daß**
der Startermotor als Starter-Generator (4) ausgebildet ist.

10. Motorsystem nach Anspruch 8 oder 9,
**dadurch gekennzeichnet, daß**
die Abgasbehandlungseinrichtung (1) mit einer elektrischen Heizeinrichtung (12) gekoppelt ist.

## Claims

1. Method for reducing the exhaust emissions during the cold start of an internal combustion engine (3) which is coupled to a starter motor (4) and in the exhaust pipe (11) of which an exhaust-gas treatment device (1) is arranged, **characterized in that** the internal combustion engine is assisted by the starter motor (4) until the operating temperature of the exhaust-gas treatment device (1) is reached.

2. Method according to Claim 1, **characterized in that** the power output from the starter motor (4) is regulated in such a manner that existing and/or impending power demands on the part of the drive system and/or auxiliary devices (2) are met by the starter motor (4).

3. Method according to Claim 1 or 2, **characterized in that** the starter motor (4), after the operating temperature of the exhaust-gas treatment device (1) has been reached, is operated as a generator, and the electrical energy consumed during the cold start is regenerated.

4. Method for reducing the exhaust emissions during the cold start of an internal combustion engine (3) which is coupled to a starter motor (4) and in the exhaust pipe (11) of which an exhaust-gas treatment device (1) is arranged, in particular the method according to at least one of Claims 1 to 3, **characterized in that** the supply of fuel to the internal combustion engine (3) starts only when a rotational speed which is close to or equal to the idling speed is exceeded.

5. Method according to at least one of Claims 1 to 4, **characterized in that** the spark ignition of the internal combustion engine (3) is delayed.

6. Method according to at least one of Claims 1 to 5, **characterized in that** the exhaust-gas treatment device (1) is heated by active heating elements (12).

7. Method according to at least one of Claims 1 to 6, **characterized in that** the shifting operations of an automatic transmission (6) coupled to the internal combustion engine (3) are delayed.

8. Engine system comprising an internal combustion engine (3), a starter motor (4) coupled thereto and an exhaust-gas treatment device (1) arranged in the exhaust pipe (11) of the internal combustion engine, **characterized by** a regulator (10) which is coupled to the starter motor (4) and is designed to carry out a method according to at least one of Claims 1 to 7.

9. Engine system according to Claim 8, **characterized in that** the starter motor is designed as a starter-generator (4).

10. Engine system according to Claim 8 or 9, **characterized in that** the exhaust-gas treatment device (1) is coupled to an electric heater device (12).

## Revendications

1. Procédé de réduction des émissions de gaz d'échappement pendant le démarrage à froid d'un moteur à combustion interne (3), qui est accouplé à un démarreur (4) et dans la conduite de gaz d'échappement (11) duquel est disposé un dispositif de traitement des gaz d'échappement (1),
**caractérisé en ce que**
le moteur à combustion interne est supporté par le démarreur (4) jusqu'à l'obtention de la température de fonctionnement du dispositif de traitement des gaz d'échappement (1).

2. Procédé selon la revendication 1,
**caractérisé en ce que**
la puissance fournie par le démarreur (4) est régulée de telle sorte que les exigences de puissance existantes et/ou imminentes du système d'entraînement et/ou de dispositifs auxiliaires (2) soient satisfaites par le démarreur (4).

3. Procédé selon la revendication 1 ou 2,
**caractérisé en ce que**
le démarreur (4), une fois atteinte la température de fonctionnement du dispositif de traitement des gaz d'échappement (1), est utilisé comme générateur et l'énergie électrique consommée pendant le démarrage à froid est régénérée.

4. Procédé de réduction des émissions de gaz d'échappement pendant le démarrage à froid d'un moteur à combustion interne (3), qui est accouplé à un démarreur (4) et dans la conduite de gaz d'échappement (11) duquel est disposé un dispositif de traitement des gaz d'échappement (1), en particulier procédé selon au moins l'une quelconque des revendications 1 à 3,
**caractérisé en ce que**
l'alimentation en carburant au moteur à combustion interne (3) s'établit seulement à partir du dépassement d'un régime proche ou égal au régime de marche à vide.

5. Procédé selon au moins l'une quelconque des revendications 1 à 4,
**caractérisé en ce que**
l'allumage par étincelle du moteur à combustion interne (3) est retardé.

6. Procédé selon au moins l'une quelconque des revendications 1 à 5,
**caractérisé en ce que**
le dispositif de traitement des gaz d'échappement (1) est chauffé par des éléments chauffants actifs (12).

7. Procédé selon au moins l'une quelconque des revendications 1 à 6,
**caractérisé en ce que**
les opérations de commutation d'une transmission automatique (6) accouplée au moteur à combustion interne (3) sont retardées.

8. Système de moteur comprenant un moteur à combustion interne (3), un démarreur (4) accouplé à celui-ci et un dispositif de traitement des gaz d'échappement (1) disposé dans la conduite de gaz d'échappement (11) du moteur à combustion interne,
**caractérisé par** un régulateur (10) accouplé au démarreur (4), qui est prévu pour mettre en oeuvre un procédé selon au moins l'une quelconque des revendications 1 à 7.

9. Système de moteur selon la revendication 8,
**caractérisé en ce que**
le démarreur est réalisé sous la forme d'un démarreur-générateur (4).

10. Système de moteur selon la revendication 8 ou 9,
**caractérisé en ce que**
le dispositif de traitement de gaz d'échappement (1) est accouplé à un dispositif de chauffage électrique (12).
